**Europäisches Patentamt**

**European Patent Office**

**Office européen des brevets**

(19)

(11) Veröffentlichungsnummer: **0 023 024**
**B1**

(12)

# EUROPÄISCHE PATENTSCHRIFT

(45) Veröffentlichungstag der Patentschrift:
**19.01.83**

(51) Int. Cl.³: **F 16 B 7/04, F 16 B 2/14**

(21) Anmeldenummer: **80104144.3**

(22) Anmeldetag: **16.07.80**

(54) **Verbindungs- und/oder Anschlusselement für Rahmenteile aus Federstahldraht.**

(30) Priorität: **18.07.79 DE 2928963**

(43) Veröffentlichungstag der Anmeldung:
**28.01.81 Patentblatt 81/4**

(45) Bekanntmachung des Hinweises auf die Patenterteilung:
**19.01.83 Patentblatt 83/3**

(84) Benannte Vertragsstaaten:
**AT BE CH FR GB IT LI LU NL SE**

(56) Entgegenhaltungen:
**DE-B-1 575 144**
**FR-A-1 401 361**
**GB-A-444 518**
**US-A-2 021 825**

(73) Patentinhaber: **No-Sag Drahtfedern GmbH,**
**D-4835 Rietberg 2 - Neuenkirchen (DE)**

(72) Erfinder: **Die Erfinder haben auf ihre Nennung verzichtet**

(74) Vertreter: **Buschhoff, Josef, Dipl.-Ing. et al,**
**Patentanwälte Dipl.-Ing. Buschhoff Dipl.-Ing. Hennicke,**
**Dipl.-Ing. Vollbach**
**Kaiser-Wilhelm-Ring 24 Postfach 190 408,**
**D-5000 Köln 1 (DE)**

## Verbindungs- und/oder Anschlußelement für Rahmenteile aus Federstahldraht

Die Erfindung betrifft ein Verbindungs- und/oder Anschlußelement für Rahmenteile von Polstermöbeln, Fahrzeugsitzen od. dgl. aus Federstahldraht mit einem im Querschnitt C-förmigen Halter aus flächigem Material, der aus einer Stegplatte und zwei Flanschteilen besteht, die von zwei einander gegenüberliegenden, nach innen zurückgebogenen Rändern der Stegplatte gebildet werden und von denen jeder einen Rahmendraht mindestens teilweise umfaßt, der im Halter von einem Klemmstück festgeklemmt wird, das eine mit einer Verzahnung versehene, selbsthemmende Keilfläche hat.

Es ist ein Verbindungselement dieser Art bekannt (FR-A-1 401 361), bei dem die beiden Rahmendrähte von einem keilförmigen Klemmstück auseinandergedrückt und in die von den umgebogenen Rändern des Halters gebildeten Rinnen gedrückt werden. Hierbei liegt eine verzahnte Fläche des Keilstückes an dem einen Rahmendraht und eine dieser verzahnten Fläche gegenüberliegende Keilfläche des Klemmstückes am anderen Rahmendraht an. Infolge der keilförmigen Ausbildung des einen Klemmstückes wird mindestens einer der Rahmendrähte beim Eintreiben des Klemmstückes um den oberen Rand des Halters geschwenkt, wobei gleichzeitig die auf den Draht ausgeübte Keilkraft nur auf den oberen Rand des Halters übertragen wird. Hierbei entsteht eine hohe singuläre Beanspruchung des Halters, durch die dieser im Bereich des oberen Randes auseinandergebogen werden kann. Auch bei fortschreitendem Eintreiben des keilförmigen Klemmstückes ist der Anpreßdruck über die Länge des Halters nicht gleichmäßig, mit dem die Drähte gegen die Innenfläche des Halters gedrückt werden. Ferner besteht beim Eintreiben des Keiles die Gefahr, daß die gezahnte Klemmfläche des Klemmstückes den Rahmendraht mitnimmt, an dem sie anliegt, so daß dieser im Halter entlangrutscht und seine Lage verändert.

Es ist auch bereits ein Anschlußelement für zylindrische Stäbe bekannt, das aus einem langgestreckten Gehäuse mit in seitlichem Abstand voneinander angeordneten Ausnehmungen zum Durchtritt der zylindrischen Stäbe versehen ist und in dem parallel zur Längsachse verschiebliche Druckstücke vorgesehen sind, die durch Keile gegen den Außenumfang der miteinander zu verbindenden, zylindrischen Stäbe oder Drähte gedrückt werden (GB-A-444 518). Diese bekannte Vorrichtung hat einen komplizierten Aufbau und benötigt außer zwei exzentrisch angeordneten Keilen noch besondere Druckstücke, die im Haltergehäuse querverschieblich gelagert und an diesen befestigt werden müssen.

Bei Rahmenteilen für Polstermöbel und Fahrzeugsitze, die nur wenig Raum einnehmen, aber dennoch einen guten Federungskomfort bieten sollen und deshalb aus Federstahldraht hergestellt sind, ist es insbesondere bei der Verbindung von Federstahldrähten benachbarter Rahmen wichtig, daß die Rahmendrähte in ihren Verbindungs- und Anschlußelementen festsitzen.

Aufgabe der Erfindung ist es deshalb, ein Verbindungs- und/oder Anschlußelement für Rahmenteile aus Federstahl der eingangs näher bezeichneten Art zu schaffen, das einerseits an den Rahmenteilen sicher befestigt werden kann, ohne deren Form oder Federungseigenschaften zu beeinflussen oder zu verändern, und in dem die Rahmendrähte festsitzen und auf der ganzen Länge des Halters an diesem fest anliegen.

Diese Aufgabe wird mit der Erfindung dadurch gelöst, daß zwei Klemmstücke vorgesehen sind, von denen jedes eine der Dicke des Rahmendrahtes angepaßte Fläche und eine Keilfläche aufweist, wobei die Keilflächen der Klemmstücke zusammenwirken.

Durch Gegeneinanderschieben der Klemmstücke wird auf die in den Flanschteilen des Halters liegenden Rahmendrähte ein hoher Seitendruck ausgeübt, der die Rahmendrähte fest in die Flanschteile preßt, so daß diese sich im Halter weder in Längsrichtung noch quer dazu bewegen können. Da die Keilflächen beider Klemmstücke einander zugewandt sind, bleiben die den Rahmendrähten zugewandten Flächen beim Verkeilen parallel, so daß sie diese Drähte auf ganzer Länge gleichmäßig gegen die Innenwände des Halters pressen.

Bei Anordnung von mehreren, in Längsrichtung der Rahmendrähte im Abstand voneinander angeordneten Haltern kann hierdurch eine feste und biegesteife Verbindung von zwei Rahmenteilen aus Federdraht erzielt werden.

Die freien Ränder der Flanschteile verlaufen zweckmäßig parallel zur Stegplatte und stehen nach innen über die Rahmendrähte vor. Sie bilden dann zusammen mit der Stegplatte eine Führung für die Klemmstücke an deren Vorder- und Rückseite. Hierdurch ist gewährleistet, daß die Klemmstücke auch nicht nach vorne aus dem Halter herausfallen können.

Die Stegplatte kann mit Arretiervorrichtungen für die Klemmstücke versehen sein. Beispielsweise kann die Stegplatte auf ihrer den Klemmstücken zugewandten Fläche Höcker oder Zacken aufweisen, welche die Klemmstücke an einer Axialbewegung hindern, nachdem sie gegeneinander verschoben worden sind und den Radialdruck auf die Rahmendrähte ausüben.

Um Flachfedern, Wellenfedern, Traversen oder Befestigungsteile an den Stahldrahtrahmen befestigen zu können, kann der Halter mit Anschlußteilen versehen sein, die an den Halter angeschweißt, angenietet oder angeschraubt sein können. Der Halter selbst besteht zweckmäßig aus Stahlblech, während die Klemmstücke vorteilhaft aus Kunststoff gefertigt werden, welcher einerseits eine hohe Festigkeit aufweist, andererseits aber auch eine gewisse Nachgiebigkeit besitzt und einen guten Formschluß zwischen den Klemmstücken einerseits und den Rahmendrähten andererseits im Halter gewährleistet.

Weitere Merkmale und Vorteile der Erfindung ergeben sich aus der nachfolgenden Beschreibung und den Zeichnungen einer bevorzugten Ausführungsform der Erfindung, die an einem Ausführungsbeispiel näher erläutert wird. Es zeigt

Fig. 1 ein Verbindungselement nach der Erfindung in einer Vorderansicht in teilweise montiertem Zustand,

Fig. 2 das Verbindungselement nach Fig. 1 nach der Montage an zwei Rahmendrähten in einer Vorderansicht,

Fig. 3 den Gegenstand der Fig. 2 in einem Horizontalschnitt nach Linie III-III der Fig. 2 und

Fig. 4 zwei durch mehrere Verbindungs- und/oder Anschlußelemente nach der Erfindung verbundene Rahmenteile einer Rückenlehne für einen Polsterstuhl in einer perspektivischen Darstellung.

In den Zeichnungen ist mit 10 ein Verbindungselement für zwei Rahmenteile 11 und 12 einer Rückenlehne 13 für einen Polsterstuhl bezeichnet, das aus einem C-förmigen Halter 14 und zwei Klemmstücken 15 besteht. Der C-förmige Halter 14 ist aus einem Stück Stahlblech gefertigt und besteht aus einer Stegplatte 16 und zwei Flanschteilen 17 und 18, von denen jeder einen Rahmendraht 19 bzw. 20 der beiden Rahmenteile 11 und 12 dicht anliegend umschließt.

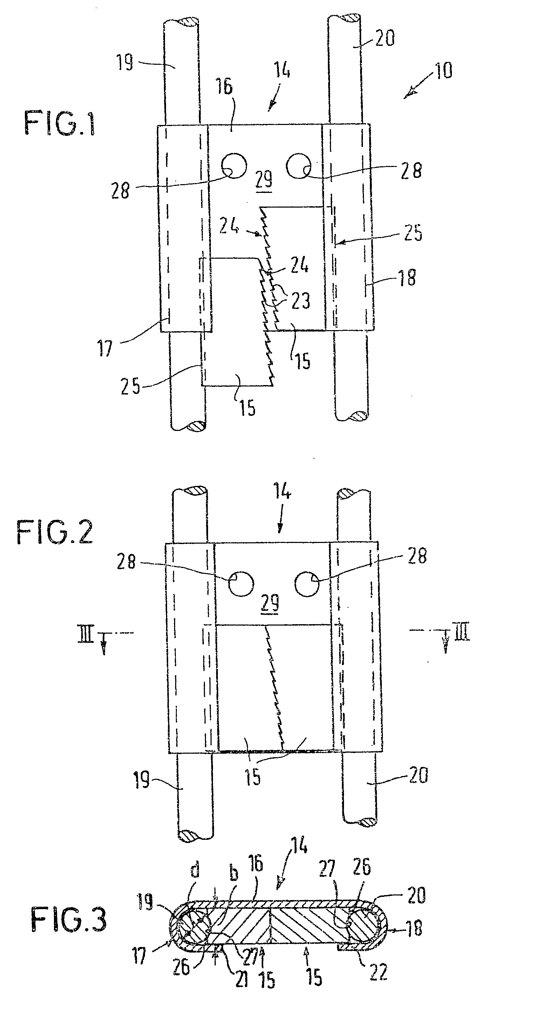

Man erkennt aus Fig. 3, daß die freien Ränder 21 und 22 der Flanschteile 17 bzw. 18 nach innen über die Rahmendrähte 19 und 20 vorstehen und zusammen mit der Stegplatte 16 die Klemmstücke 15 auf ihrer Vorder- und Rückseite führen.

Die Klemmstücke 15 bestehen bei dem vorliegenden Ausführungsbeispiel aus Kunststoff, sie können jedoch auch aus einem anderen Material, beispielsweise aus Metall, gefertigt sein. Jedes Klemmstück hat eine mit einer Verzahnung 23 versehene Keilfläche 24, die eine solche Neigung hat, daß die Keilflächen selbsthemmend sind, d. h. unter Seitenbelastung nicht wieder zurückgleiten können. Bei dem dargestellten Ausführungsbeispiel sind die Keilflächen 24 der Klemmstücke 15 einander zugewandt.

Die der Keilfläche 24 gegenüberliegende Fläche 25 eines jeden Klemmstückes 15 ist in ihrer Breite b der Dicke d des Rahmendrahtes 19 bzw. 20 angepaßt, wobei im vorliegenden Ausführungsbeispiel jedes Klemmstück 15 eine gleichbleibende Dicke b hat. Es ist jedoch darauf hinzuweisen, daß die Klemmstücke in ihrem mittleren Bereich, d. h. im Bereich der Keilflächen 24, auch dicker sein und nach vorne über den Halter vorspringen könnten.

An ihren den Rahmendrähten 19 bzw. 20 zugewandten Flächen 26 haben die Klemmstücke 15 Rinnen 27, die der Querschnittsform der Rahmendrähte 19 bzw. 20 angepaßt, im vorliegenden Fall also kreisförmig ausgerundet sind.

Um irgendwelche Anschlußteile, beispielsweise eine Einhängelasche 30, am Halter befestigen zu können, ist dieser mit zwei Löchern 28 versehen, durch welche hier nicht näher dargestellte Nieten oder Schrauben hindurchgesteckt werden können. Um die Klemmstücke 15 nach der Montage am Halter 14 sicher festzuhalten, sind auf der Innenfläche 29 des Halters hier nicht näher dargestellte Arretiervorrichtungen, wie vorspringende Noppen oder Haken, angeordnet, die sich in die Rückfläche der Klemmstücke eingraben und diese festhalten.

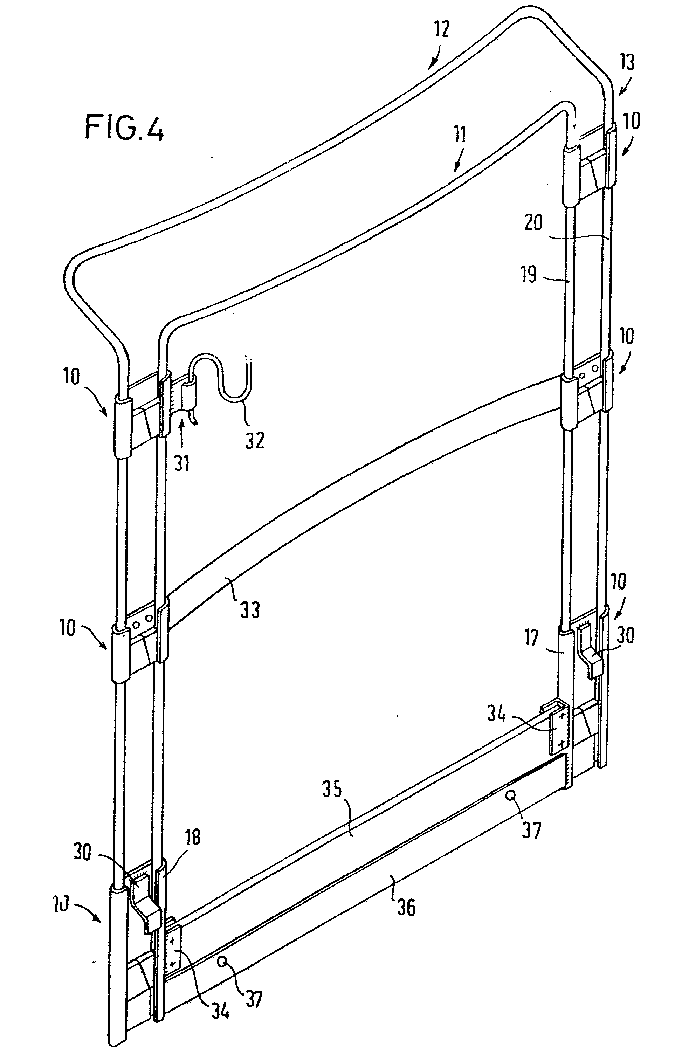

In Fig. 4 der Zeichnung ist die Rückenlehne 13 eines Polsterstuhles gezeigt, die, wie bereits oben erwähnt, aus zwei Rahmenteilen 11 und 12 aus Federstahldraht besteht. Die beiden U-förmigen Rahmenteile 11 und 12 sind durch mehrere Verbindungs- und Anschlußelemente 10 miteinander verbunden. Man erkennt, daß die Verbindungs- und Anschlußelemente 10 verschiedene Längen haben können, und daß an einzelnen von ihnen Anschlußteile, wie Laschen 31, zum Einhängen von Wellenfedern 32 oder eine Bandstahltraverse angeschweißt oder angenietet sind. Bei den beiden Verbindungs- und Anschlußelementen 10, welche die Rahmenteile 11 und 12 an ihren unteren Enden miteinander verbinden, sind an der Innenfläche 29 des Halters 14 verkröpfte Einhängelaschen 30 angeschweißt. Ferner sind an den inneren Flanschen 17 bzw. 18 der Halter im Querschnitt U-förmige Beschläge 34 angeschweißt, welche eine Quertraverse 35 tragen, die den Rahmen versteift und eine feste Anlage am Sitz des Polstermöbels gewährleistet. Unter dieser Traverse kann noch ein Träger 36 an die beiden Anschlußelemente 10 angeschweißt sein, an dem der Sitz später angeschraubt werden kann, wofür Löcher 37 im Träger vorgesehen sind.

Man erkennt, daß zwar zwischen den beiden Rahmenteilen 11 und 12 der Rückenlehne eine feste Verbindung hergestellt wird und daß auch die Wellenfeder 32 sowie die Traverse 35, der Träger 36 und das Federstahlband 33 sicher an der Rückenlehne befestigt sind, daß der obere Rand der Rückenlehne 13 federnd nachgiebig bleibt, da die Federeigenschaften der Rahmendrähte 19, 20 durch die an ihnen befestigten Verbindungs- und Anschlußelemente nicht beeinträchtigt werden.

Die Erfindung ist nicht auf das Ausführungsbeispiel beschränkt, sondern es ist eine Reihe von Änderungen und Ergänzungen möglich, ohne den Rahmen der Erfindung zu verlassen. Beispielsweise könnte der Halter auch aus einem harten Kunststoff gefertigt sein und es ist auch möglich, die Klemmstücke etwas anders auszubilden, ohne den Rahmen der Erfindung zu verlassen.

## Patentansprüche

1. Verbindungs- und/oder Anschlußelement für Rahmenteile von Polstermöbeln, Fahrzeugsitzen od. dgl. aus Federstahldraht mit einem im Querschnitt C-förmigen Halter (14) aus flächigem Material, der aus einer Stegplatte (16) und zwei Flanschteilen (17, 18) besteht, die von zwei einander gegenüberliegenden, nach innen zurückgebogenen Rändern (21, 22) der Stegplatte (16) gebildet werden und von denen jeder einen Rahmendraht (19 bzw. 20) mindestens teilweise umfaßt, der im Halter (14) von einem Klemmstück (15) festgeklemmt wird, das eine mit einer Verzahnung (23) versehene, selbsthemmende Keilfläche (24) hat, dadurch gekennzeichnet, daß zwei Klemmstücke (15) vorgesehen sind, von denen jedes eine der Dicke (d) des Rahmendrahtes (19 bzw. 20) angepaßte Fläche (26) und eine Keilfläche (24) aufweist, wobei die Keilflächen (24) der Klemmstücke (15) zusammenwirken.

2. Element nach Anspruch 1, dadurch gekennzeichnet, daß die Klemmstücke (15) an ihren den Rahmendrähten (19 bzw. 20) zugewandten Flächen (26) Rinnen (27) aufweisen, die der Querschnittsform der Rahmendrähte (19 bzw. 20) angepaßt sind.

3. Element nach Anspruch 1 oder 2, dadurch gekennzeichnet, daß die freien Ränder (21, 22) der Flanschteile (17, 18) parallel zur Stegplatte (16) verlaufen, nach innen über die Rahmendrähte (19, 20) vorstehen und zusammen mit der Stegplatte (16) eine Führung für die Klemmstükke (15) bilden.

4. Element nach einem der Ansprüche 1 bis 3, dadurch gekennzeichnet, daß die Stegplatte (16) mit Arretiervorrichtungen für die Klemmstücke (15) versehen ist.

5. Element nach einem der Ansprüche 1 bis 4, dadurch gekennzeichnet, daß an dem Halter (14) Anschlußteile (30, 31, 34) befestigt sind.

6. Element nach einem der Ansprüche 1 bis 5, dadurch gekennzeichnet, daß der Halter (14) aus Stahlblech und die Klemmstücke (15) aus Kunststoff bestehen.

7. Element nach einem der Ansprüche 1 bis 6, dadurch gekennzeichnet, daß der Halter (14) mit Löchern (28) zum Befestigen von Verbindungsmitteln und Anschlußteilen versehen ist.

## Claims

1. Connecting and/or joining element for frame parts of upholstered furniture, vehicle seats or the like, made of spring-steel wire, with a holder (14) of C-shaped cross-section and made of sheet-like material, which holder consists of a web plate (16) and two flange parts (17, 18) which are formed by two edges (21, 22) of the web plate (16), which are located opposite one another and are bent back inwards, and each of which at least partially surrounds a frame wire (19 and 20 respectively) clamped firmly in the holder (14) by a clamping piece (15) which has a self-locking wedge surface (24) provided with toothing (23), characterised in that there are two clamping pieces (15), each of which has a surface (26) adapted to the thickness (d) of the frame wire (19 and 20 respectively) and a wedge surface (24), the wedge surfaces (24) of the clamping pieces (15) interacting with one another.

2. Element according to Claim 1, characterised in that the clamping pieces (15) have on their surfaces (26) facing the frame wires (19 and 20 respectively) grooves (27) which match the cross-sectional shape of the frame wires (19 and 20 respectively).

3. Element according to Claim 1 or 2, characterised in that the free edges (21, 22) of the flange parts (17, 18) extend parallel to the web plate (16), project inwards beyond the frame wires (19, 20) and form, together with the web plate (16), a guide for the clamping pieces (15).

4. Element according to one of Claims 1 to 3, characterised in that the web plate (16) is provided with locking devices for the clamping pieces (15).

5. Element according to one o Claims 1 to 4, characterised in that joining parts (30, 31, 34) are fastened to the holder (14).

6. Element according to one of Claims 1 to 5, characterised in that the holder (14) consists of sheet steel and the clamping pieces (15) consist of plastic.

7. Element according to one of Claims 1 to 6, characterised in that the holder (14) is provided with holes (28) for fastening connecting means and joining parts.

## Revendications

1. Elément d'assemblage et/ou de jonction pour éléments de cadre de meubles rembourrés, de sièges de véhicules ou l'équivalent, en fil d'acier à ressorts, l'élément d'assemblage et/ou de jonction comportant un support (14) en matière plate, de section transversale en forme de C, qui se compose d'une plaque d'âme et d'entretoisement (16) et de deux ailes (17, 18) qui sont formées par deux bords (21, 22) de la plaque d'âme et d'entretoisement (16) opposés l'un à l'autre et repliés vers l'intérieur, bords qui entourent chacun, au moins en partie, un fil de cadre (19 ou 20), qui est maintenu serré dans le support (14) par une pièce de serrage (15) présentant une face en coin (24) munie d'une denture (23) et se bloquant d'elle-même, caractérisé en ce qu'il est prévu deux pièces de serrage (15) qui présentent chacune une face (26) s'adaptant à l'épaisseur (d) du fil de cadre (19 ou 20) et une face en coin (24), les faces en coin (24) des pièces de serrage (15) coopérant entre elles.

2. Elément suivant la revendication 1, caractérisé en ce que les pièces de serrage (15) présentent, à leurs faces (26) tournées vers les fils de cadre (19 et 20), des rainures (27) qui sont adaptées à la forme de la section transversale des fils de cadre (19 et 20).

3. Elément suivant l'une ou l'autre des revendications 1 et 2, caractérisé en ce que les bords libres (21, 22) des ailes (17, 18) suivent une direction parallèle à celle de la plaque d'âme et d'entretoisement (16), font saillie vers l'intérieur audelà des fils de cadre (19, 20) et forment, avec la plaque d'âme et d'entretoisement (16), un guidage pour les pièces de serrage (15).

4. Elément suivant l'une quelconque des revendications 1 à 3, caractérisé en ce que la plaque d'âme et d'entretoisement (16) est munie d'organes d'arrêt pour les pièces de serrage (15).

5. Elément suivant l'une quelconque des revendications 1 à 4, caractérisé en ce qu'au support (14) sont fixés des éléments de jonction (30, 31, 34).

6. Elément suivant l'une quelconque des revendications 1 à 5, caractérisé en ce que le support (14) est en tôle d'acier et en ce que les pièces de serrage (15) sont en matière synthétique.

7. Elément suivant l'une quelconque des revendications 1 à 6, caractérisé en ce que le support (14) est percé de trous (28) pour la fixation d'éléments d'assemblage et de pièces de jonction.

0 023 024

FIG.1

FIG.2

FIG.3

7

FIG.4